# EUROPEAN PATENT APPLICATION

(11) **EP 4 615 087 A1**
(43) Date of publication of application: **10.09.2025**
(21) Application number: 22964078.4
(22) Date of filing: 04.11.2022
(51) Int. Cl.: H04W 72/04

(54) **TIME-FREQUENCY DOMAIN SYNCHRONIZATION ADJUSTMENT METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/130042
(87) International publication number: WO 2024/092773

(57) **Abstract**

The present disclosure provides a time-frequency domain synchronization adjustment method and apparatus. According to the time-frequency domain synchronization adjustment method and apparatus provided by the present disclosure, a terminal can receive configuration information sent by a base station; time-frequency domain adjustment information sent by the base station is detected according to the configuration information, the time-frequency domain adjustment information being adjustment information related to time domain and/or frequency domain synchronization; and time domain and/or frequency domain synchronization is adjusted according to the time-frequency domain adjustment information. The present disclosure can ensure that a time domain or frequency domain synchronization error of the terminal is within a reasonable range, and improve the accuracy of time domain or frequency domain synchronization.

## Description

### TECHNICAL FIELD

The disclosure relates to the field of wireless communication technology, in particular to a method and an apparatus for adjusting time-frequency synchronization.

### BACKGROUND

In the research of wireless communication technology, satellite communication is considered to be an important aspect of future development of the wireless communications. The satellite communication refers to communication performed by a radio communication device on the ground using a satellite as a relay. The satellite communication has characteristics of: a large communication range; communication which can be performed between any two points as long as they are within a range covered by radio waves emitted by the satellite; and being less susceptible to an impact of land disasters (high reliability). By adding the satellite communication as a supplement to a current terrestrial cellular communication system, it can be foreseen that in the future wireless communication systems, the satellite communication system and the terrestrial cellular communication system may gradually achieve deep integration and truly realize intelligent connection of all things.

In a scenario of the satellite communication, data transmission has a large delay due to a long signal transmission distance between a transmitter and a receiver. For transmissions with an uplink and downlink relationship, a terminal needs to maintain uplink synchronization based on global navigation satellite system (GNSS) measurements and some auxiliary information. Presently, time-frequency synchronization can be maintained by making reference signal (RS) measurements. However, relying solely on the RS measurements cannot guarantee an accuracy of time domain or frequency domain synchronization.

### SUMMARY

The present disclosure provides a method and an apparatus for adjusting time-frequency synchronization, capable of ensuring that an error of time domain or frequency domain synchronization of a terminal is maintained within a reasonable range, and improving an accuracy of the time domain or frequency domain synchronization.

In a first aspect of embodiments of the present disclosure, there is provided a method for adjusting time-frequency synchronization. The method is performed by a terminal and includes:
receiving configuration information sent by a base station;
detecting time-frequency adjustment information sent by the base station according to the configuration information, in which, the time-frequency adjustment information is adjustment information related to time domain and/or frequency domain synchronization;
adjusting the time domain and/or frequency domain synchronization according to the time-frequency adjustment information.

In some embodiments of the present disclosure, detecting the time-frequency adjustment information sent by the base station according to the configuration information includes:
detecting, according to the configuration information, a time-frequency adjustment signaling within an uplink time interval, in which, the time-frequency adjustment signaling includes the time-frequency adjustment information, the configuration information includes a first format, a time domain resource position to be detected, and a frequency domain resource position to be detected, the first format is a signaling format of the time-frequency adjustment signaling.

In some embodiments of the present disclosure, detecting the time-frequency adjustment information sent by the base station according to the configuration information includes:
detecting, according to the configuration information, a time-frequency adjustment signaling on a preset time domain unit within an uplink time interval, in which, the time-frequency adjustment signaling includes the time-frequency adjustment information, the configuration information includes a first format and a frequency domain resource position to be detected, the first format is a signaling format of the time-frequency adjustment signaling.

In some embodiments of the present disclosure, the method further includes:
determining the uplink time interval configured by the base station.

In some embodiments of the present disclosure, detecting the time-frequency adjustment information sent by the base station according to the configuration information includes:
detecting a control instruction according to the configuration information, in which, an information field of the control instruction carries the time-frequency adjustment information, and the configuration information includes a second format, a time domain resource position to be detected, and a frequency domain resource position to be detected, and the second format is an instruction format of the control instruction; detecting, based on position information of the information field, the time-frequency adjustment information on the control instruction.

In some embodiments of the present disclosure, the method further includes:
determining the position information of the information field that is predefined; or
receiving a position configuration of the information field sent by the base station, in which, the position configuration is configured to configure the position information of the information field;
in which, the position information of the information field includes at least one of a position or a length of the information field.

In some embodiments of the present disclosure, the time-frequency adjustment information includes a preset adjustment value, or an offset adjustment value of current time-frequency, adjusting the time domain and/or frequency domain synchronization according to the time-frequency adjustment information includes:
adjusting the time domain and/or frequency domain synchronization according to the preset adjustment value or the offset adjustment value.

In some embodiments of the present disclosure, the method further includes:
receiving effective time configuration information of global navigation satellite system (GNSS) information; and/or
receiving extended time configuration information of the GNSS information.

In some embodiments of the present disclosure, the method further includes:
determining an effective time of current GNSS information according to the effective time configuration information; and/or
updating the effective time of the current GNSS information according to the extended time configuration information.

In some embodiments of the present disclosure, adjusting the time domain and/or frequency domain synchronization according to the time-frequency adjustment information includes:
performing adjustment for time domain synchronization and/or frequency domain synchronization within the effective time of the current GNSS information according to the time-frequency adjustment information.

In some embodiments of the present disclosure, the method further includes:
determining an adjustment time for time-frequency synchronization according to an application time indication of the time-frequency adjustment information; and
performing adjustment for time domain synchronization and/or frequency domain synchronization at the adjustment time.

In some embodiments of the present disclosure, the method further includes:
receiving the application time indication of the time-frequency adjustment information sent by the base station.

In a second aspect of embodiments of the present disclosure, there is provided a method for adjusting time-frequency synchronization. The method is performed by a base station, and includes:
sending configuration information to a terminal, in which, the configuration information is configured to detect time-frequency adjustment information.

In some embodiments of the present disclosure, sending the configuration information to the terminal includes:
sending, to the terminal, the configuration information including a first format, a time domain resource position to be detected, and a frequency domain resource position to be detected, in which, the configuration information is configured to detect a time-frequency adjustment signaling within an uplink time interval, and the first format is a signaling format of the time-frequency adjustment signaling.

In some embodiments of the present disclosure, sending the configuration information to the terminal includes:
sending, to the terminal, the configuration information including a first format and a frequency domain resource position to be detected, in which, the configuration information is configured to detect a time-frequency adjustment signaling on a preset time domain unit within an uplink time interval, and the first format is a signaling format of the time-frequency adjustment signaling.

In some embodiments of the present disclosure, sending the configuration information to the terminal includes:
sending, to the terminal, the configuration information including a second format, a time domain resource position to be detected, and a frequency domain resource position to be detected, in which, the configuration information is configured to detect a control instruction, and an information field of the control instruction carries the time-frequency adjustment information, and the second format is an instruction format of the control instruction.

In some embodiments of the present disclosure, the method further includes:
sending the uplink time interval to the terminal.

In some embodiments of the present disclosure, the method further includes:
sending a position configuration of the information field to the terminal, in which, the position configuration is configured to configure position information of the information field;
in which, the position information of the information field includes at least one of a position and a length of the information field.

In some embodiments of the present disclosure, the method further includes:
sending effective time configuration information of global navigation satellite system (GNSS) information to the terminal, in which, the effective time configuration information is configured to determine an effective time of current GNSS information; and/or
sending extended time configuration information of the GNSS information to the terminal, in which, the extended time configuration information is configured to update the effective time of the current GNSS information.

In some embodiments of the present disclosure, the method further includes:
sending an application time indication of the time-frequency adjustment information to the terminal, in which, the application time indication is configured to determine an adjustment time for time-frequency synchronization.

In a third aspect of embodiments of the present disclosure, there is provided a terminal. The terminal includes:
a receiving module, configured to receive configuration information sent by a base station;
a processing module, configured to detect time-frequency adjustment information sent by the base station according to the configuration information, in which, the time-frequency adjustment information is adjustment information related to time domain and/or frequency domain synchronization;
the processing module further configured to adjust the time domain and/or frequency domain synchronization according to the time-frequency adjustment information.

In a fourth aspect of embodiments of the present disclosure, there is provided a base station. The base station includes:
a sending module configured to send configuration information to a terminal, in which, the configuration information is configured to detect time-frequency adjustment information.

In a fifth aspect of embodiments of the disclosure, there is provided a communication device. The communication device includes: a transceiver; a memory; a processor, coupled to the transceiver and the memory respectively. The processor is configured to, by means of executing computer executable instructions on the memory, control wireless signal reception and transmission of the transceiver, and capable of implementing the method as described in the first aspect of embodiments of the disclosure or the second aspect of embodiments of the disclosure.

In a sixth aspect of embodiments of the disclosure, there is provided a computer storage medium. The computer storage medium is configured to store computer executable instructions which, when executed by a processor, can implement the method as described in the first aspect of embodiments of the disclosure or the second aspect of embodiments of the disclosure.

In a seventh aspect of embodiments of the disclosure, there is provided a communication system. The system includes a terminal and a base station. The terminal is configured to perform the method for adjusting time-frequency synchronization as described in the first aspect of embodiments, and the base station is configured to perform the method for adjusting time-frequency synchronization as described in the second aspect of embodiments.

In the method and the apparatus for adjusting time-frequency synchronization provided in embodiments of the present disclosure, the adjustment information related to time domain and/or frequency domain synchronization sent by the base station may be detected according to the configuration information sent by the base station, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved.

Additional aspects and advantages of embodiments of the disclosure will be given in part in the following descriptions, become apparent in part from the following descriptions, or be learned from the practice of the embodiments of the disclosure.

### BRIEF DESCRIPTION OF THE DRAWINGS

The above and/or additional aspects and advantages of the present disclosure will become apparent and more readily appreciated from the following descriptions of embodiments made with reference to the accompanying drawings.
FIG. 1 is a flowchart of a method for adjusting time-frequency synchronization according to an embodiment of the present disclosure.
FIG. 2 is a diagram of an example of determining an effective time of current GNSS information according to an embodiment of the present disclosure.
FIG. 3 is a diagram of an example of determining an effective time of current GNSS information according to an embodiment of the present disclosure.
FIG. 4 is a flowchart of a method for adjusting time-frequency synchronization according to an embodiment of the present disclosure.
FIG. 5 is a flowchart of a method for adjusting time-frequency synchronization according to an embodiment of the present disclosure.
FIG. 6 is a flowchart of a method for adjusting time-frequency synchronization according to an embodiment of the present disclosure.
FIG. 7 is a flowchart of a method for adjusting time-frequency synchronization according to an embodiment of the present disclosure.
FIG. 8 is a flowchart of a method for adjusting time-frequency synchronization according to an embodiment of the present disclosure.
FIG. 9 is a flowchart of a method for adjusting time-frequency synchronization according to an embodiment of the present disclosure.
FIG. 10 is a timing sequence diagram of a method for adjusting time-frequency synchronization according to an embodiment of the present disclosure.
FIG. 11 is a block diagram of an apparatus for adjusting time-frequency synchronization according to an embodiment of the present disclosure.
FIG. 12 is a block diagram of an apparatus for adjusting time-frequency synchronization according to an embodiment of the present disclosure.
FIG. 13 is a structural diagram of a communication device according to an embodiment of the present disclosure.
FIG. 14 is a structural diagram of a chip according to an embodiment of the present disclosure.

### DETAILED DESCRIPTION

Embodiments of the present disclosure are described in detail below, and examples of which are illustrated in the accompanying drawings. The same or similar reference numerals throughout represent the same or similar elements or elements having the same or similar functions. The embodiments described below with reference to the accompanying drawings are examples and are intended to be used to explain the present disclosure, and should not be understood as a limitation to the present disclosure.

In a scenario of the satellite communication, data transmission has a large delay due to a long signal transmission distance between a transmitter and a receiver. For transmissions with an uplink and downlink relationship, a terminal needs to maintain uplink synchronization based on global navigation satellite system (GNSS) measurements and some auxiliary information. Presently, time-frequency synchronization can be maintained by making reference signal (RS) measurements. However, relying solely on the RS measurements cannot guarantee an accuracy of time domain or frequency domain synchronization.

To this end, the present disclosure provides a method and an apparatus for adjusting time-frequency synchronization, capable of ensuring that an error of time domain or frequency domain synchronization of a terminal is maintained within a reasonable range, and improving an accuracy of the time domain or frequency domain synchronization.

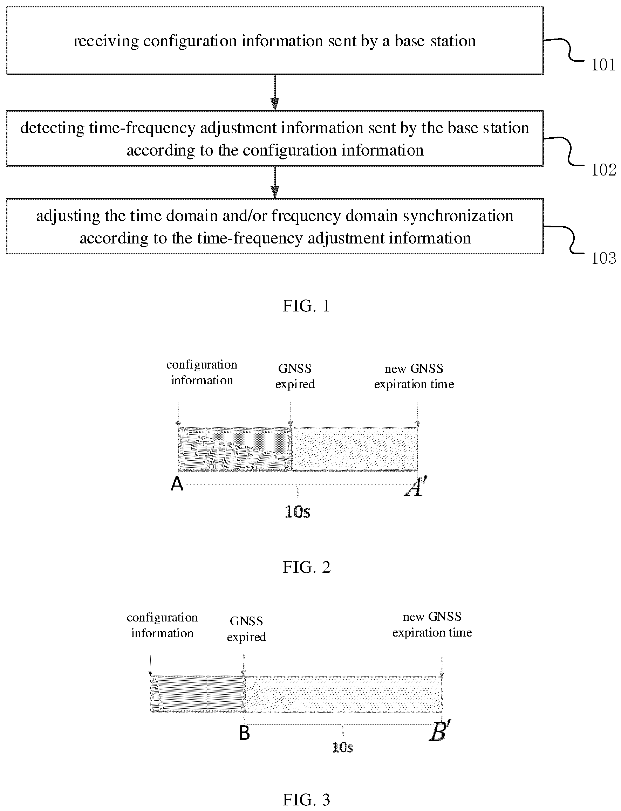

FIG. 1 is a flowchart of a method for adjusting time-frequency synchronization according to an embodiment of the present disclosure. As illustrated in FIG. 1, the method is performed by a terminal and may include the following steps.

At step 101, configuration information sent by a base station is received.

The configuration information may include information related to time-frequency adjustment information sent by the base station. The configuration information is borne and sent by the base station via a high-layer signaling or a physical layer signaling. The high-layer signaling may include system information, a radio resource control (RRC) signaling, or a media access control (MAC) control element (CE).

At step 102, time-frequency adjustment information sent by the base station is detected according to the configuration information.

The time-frequency adjustment information is adjustment information related to time domain and/or frequency domain synchronization. The time-frequency adjustment information may be an absolute adjustment value, such as a preset adjustment value as defined, which may include a preset time domain adjustment value and a preset frequency domain adjustment value. In addition, the time-frequency adjustment information may also be an adjustment value relative to a reference value, such as the reference value may be an offset value relative to a current time domain or frequency domain adjustment value of the terminal, that is, equivalent to an offset adjustment value for the current time-frequency, which may include a time domain offset adjustment value and a frequency domain offset adjustment value. For the embodiments of the present disclosure, the adjustment information related to time domain and/or frequency domain synchronization sent by the base station may be detected and obtained at a specific position according to the configuration information.

At step 103, the time domain and/or frequency domain synchronization is adjusted according to the time-frequency adjustment information.

For the embodiments of the present disclosure, as an optional implementation, the steps of an embodiment may include: adjusting the time domain and/or frequency domain synchronization according to the preset adjustment value or the offset adjustment value. Specifically, a current time domain synchronization value may be adjusted to the preset time domain adjustment value and/or a current frequency domain synchronization value may be adjusted to the preset frequency domain adjustment value. Or, an offset value for the current time domain synchronization may be adjusted according to the time domain offset adjustment value and/or an offset value for the current frequency domain synchronization may be adjusted according to the frequency domain offset adjustment value. By means of adjusting the time domain and/or frequency domain synchronization value based on the time-frequency adjustment information, it may effectively ensure that an error of the time domain or frequency domain synchronization of the terminal is maintained within a reasonable range, and effectively maintain synchronization of uplink time-frequency.

In a specific application scenario, for transmissions with an uplink and downlink relationship, the terminal needs to maintain uplink synchronization based on global navigation satellite system (GNSS) measurements and some auxiliary information. However, in the 3rd Generation Partnership Project (3GPP) R18 standard, when supporting services with longer transmission times, in a case where GNSS information expires, the terminal needs to disconnect a communication connection with the network side, enters an idle (IDLE) state, and re-executes a measurement process of the GNSS information. However, this method will not be able to keep the GNSS information in an effective state, and thus cannot support continuous communication between the terminal and the network side, which is likely to lead to a certain amount of energy consumption.

In view of this, for the embodiments of the present disclosure, as an optional implementation, the configuration information may also include the GNSS information of the terminal itself, and accordingly, the terminal may perform adjustment for the time domain synchronization and/or frequency domain synchronization within an effective time (or validation duration) of the current GNSS information according to the time-frequency adjustment information. In addition, in order to ensure the continuous communication between the terminal and the network side and realize closed-loop synchronization adjustment for the time domain and/or the frequency domain, the terminal may timely obtain an available duration (or validity duration) of the current GNSS information, and when the current GNSS information expires, the effective time of the GNSS information is determined by extending or re-measuring the available duration of GNSS, so that the GNSS information keeps in the effective state. In a specific application scenario, as an optional implementation, the steps of an embodiment may include: receiving effective time configuration information of the GNSS information; and/or receiving extended time configuration information of the GNSS information; determining the effective time of the current GNSS information according to the effective time configuration information; and/or updating the effective time of the current GNSS information according to the extended time configuration information. By means of this implementation, a frequency of the terminal performing the GNSS information measurement can be reduced, and the energy consumption of the terminal can be reduced.

Correspondingly, length information of the available time of the current GNSS information may be carried in the effective time configuration information of the GNSS information, and the terminal may determine the available time of its own GNSS information based on the length information, that is, update an expiration time of the GNSS information according to the available time of its own GNSS information. As shown in FIG. 2, the effective time configuration information of the GNSS information is received at point A before the current GNSS information expires, and the effective time configuration information of the GNSS information indicates that the length information of the available time of the current GNSS information is 10s, then new GNSS expiration time point A' can be re-determined according to the length information of the available time. Within the effective time of the current GNSS information between point A and point A', the terminal maintains the state of the communication connection with the base station (does not enter the IDLE state), and does not perform the measurement operation of the GNSS information. In addition, the terminal may also receive the extended time configuration information of the GNSS information sent by the base station before the current GNSS information expires or after the current GNSS information expires. The extended time configuration information of the GNSS information may include whether to extend the effective time of the current GNSS information and information related to an extended duration. The information related to the extended duration may include at least one of a time length or an extended start time point that the current GNSS information is extended to be effective. Furthermore, the terminal may extend the effective time of the current GNSS information from an expiration time point of the current GNSS information and/or the extended start time point, and an extended length of the effective time is the time length. As shown in FIG. 3, the terminal may receive the extended time configuration information of the GNSS information sent by the base station in a case of determining that the current GNSS information is about to expire or has already expired. The extended time configuration information of the GNSS information of the base station indicates that the extended start time point (such as the expiration time point of the current GNSS information) is B, and the length that the effective time is extended is b (such as 10s). Therefore, the terminal may further extend the effective time with the length of b from the extended start time point B indicated by the configuration information, and further obtain the new GNSS expiration time point B' by means of extension. Within the effective time of the current GNSS information between point B and point B', the terminal maintains the state of the communication connection with the base station (does not enter the IDLE state), and does not perform the measurement operation of the GNSS information.

For the embodiments of the present disclosure, as an optional implementation, in a case of adjusting the time domain and/or frequency domain synchronization according to the time-frequency adjustment information, the terminal may perform the adjustment for the time domain synchronization and/or the frequency domain synchronization at an indicated time. Accordingly, the steps of an embodiment may include: determining an adjustment time for time-frequency synchronization according to an application time indication of the time-frequency adjustment information; and performing the adjustment for time domain synchronization and/or frequency domain synchronization at the adjustment time. Accordingly, the step of the embodiment may also include: receiving the application time indication of the time-frequency adjustment information sent by the base station. For example, according to the application time indication of the time-frequency adjustment information, the adjustment time for the time-frequency synchronization is determined to be at a slot that is 10 slots after a current time domain unit, then the terminal may start to perform the adjustment for the time domain synchronization and/or frequency domain synchronization at the slot that is 10 slots after the current time domain unit. By means of this implementation, settings of the application time regarding the adjustment for the time domain synchronization and/or frequency domain synchronization can be realized, which can meet user's personalized needs on the adjustment for the time domain synchronization and/or frequency domain synchronization.

It should be noted that the embodiments of the present disclosure may select a combination of any one or more of the steps of the optional implementations to adjust the time domain and/or frequency domain synchronization. For example, the time domain and/or frequency domain synchronization may be adjusted at an original effective time of the current GNSS information according to the preset adjustment value or the offset adjustment value, or the time domain and/or frequency domain synchronization may be adjusted according to the preset adjustment value or the offset adjustment value within the extended effective time of the current GNSS information, or the time domain and/or frequency domain synchronization may be adjusted according to the preset adjustment value or the offset adjustment value at the adjustment time within the extended effective time of the current GNSS information, and so on, which is not specifically limited herein.

In summary, according to the method for adjusting time-frequency synchronization provided by the embodiments of the present disclosure, the adjustment information related to time domain and/or frequency domain synchronization sent by the base station may be detected according to the configuration information sent by the base station, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved. Moreover, the method may also reduce the frequency of the terminal performing the GNSS information measurement, reduce the energy consumption of the terminal, and meet the user's personalized needs on the adjustment for time domain synchronization and/or frequency domain synchronization.

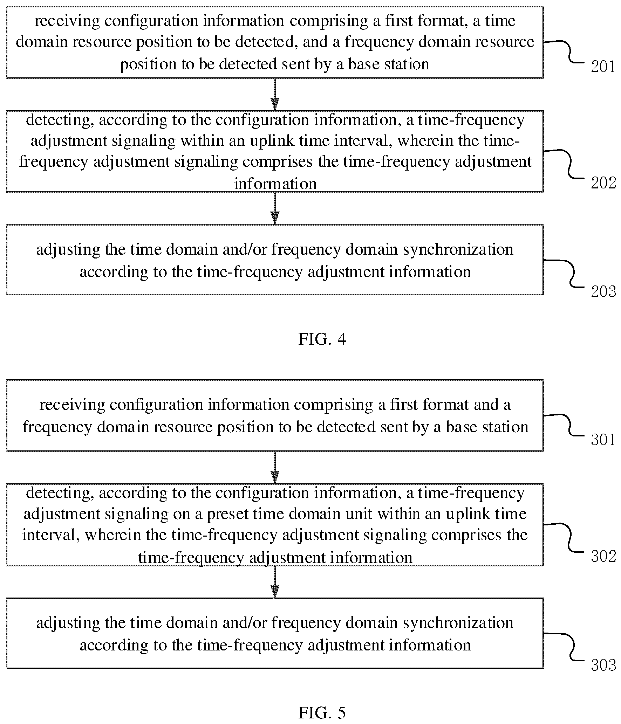

FIG. 4 is a flowchart of a method for adjusting time-frequency synchronization according to an embodiment of the present disclosure. The method is performed by a terminal, and as shown in FIG. 4, may include the following steps, based on the embodiment shown in FIG. 1.

At step 201, configuration information including a first format, a time domain resource position to be detected, and a frequency domain resource position to be detected, sent by a base station, is received.

The first format is a signaling format of the time-frequency adjustment signaling. In addition, the configuration information may also include the number of detections, an aggregation level, etc., which is not specifically limited herein.

At step 202, a time-frequency adjustment signaling is detected within an uplink time interval according to the configuration information. The time-frequency adjustment signaling includes the time-frequency adjustment information.

The time-frequency adjustment signaling may be a high-level signaling such as a radio resource control (RRC) signaling, a media access control (MAC) control element (CE) or a physical layer signaling such as downlink control signaling (DCI). The time-frequency adjustment information is adjustment information related to time domain and/or frequency domain synchronization. The time-frequency adjustment information may be an absolute adjustment value, such as a preset adjustment value as defined, which may include a preset time domain adjustment value and a preset frequency domain adjustment value. In addition, the time-frequency adjustment information may also be an adjustment value relative to a reference value, such as the reference value may be an offset value relative to a current time domain or frequency domain adjustment value of the terminal, that is, equivalent to an offset adjustment value for the current time-frequency, which may include a time domain offset adjustment value and a frequency domain offset adjustment value.

In a specific application scenario, before performing the step of this embodiment, the steps of the embodiment may also include: determining the uplink time interval configured by the base station. For an embodiment of the present disclosure, since the configuration information includes the time domain resource position to be detected and the frequency domain resource position to be detected, detection of the time-frequency adjustment signaling may be implemented at a specific time domain resource position and/or a specific frequency domain resource position within the uplink time interval, and then the time-frequency adjustment information included in the time-frequency adjustment signaling may be obtained.

At step 203, the time domain and/or frequency domain synchronization is adjusted according to the time-frequency adjustment information.

For this embodiment of the present disclosure, reference may be made to the relevant description of the step 103 of the embodiments for details, which will not be repeated herein.

In summary, according to the method for adjusting time-frequency synchronization provided by the embodiments of the present disclosure, the adjustment information related to time domain and/or frequency domain synchronization sent by the base station may be detected, according to the configuration information including the first format, the time domain resource position to be detected, and the frequency domain resource position to be detected that is sent by the base station within the uplink time interval, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved. Moreover, the method may also reduce the frequency of the terminal performing the GNSS information measurement, reduce the energy consumption of the terminal, and meet the user's personalized needs on the adjustment for the time domain synchronization and/or frequency domain synchronization.

FIG. 5 is a flowchart of a method for adjusting time-frequency synchronization according to an embodiment of the present disclosure. The method is performed by a terminal, and as shown in FIG. 5, may include the following steps, based on the embodiment shown in FIG. 1.

At step 301, configuration information including a first format and a frequency domain resource position to be detected, sent by a base station, is received.

The first format is a signaling format of the time-frequency adjustment signaling. In addition, the configuration information may also include the number of detections, an aggregation level, etc., which is not specifically limited herein.

At step 302, a time-frequency adjustment signaling is detected, according to the configuration information, on a preset time domain unit within an uplink time interval. The time-frequency adjustment signaling includes the time-frequency adjustment information.

The time-frequency adjustment signaling may be a high-level signaling such as a radio resource control (RRC) signaling, a media access control (MAC) control element (CE) or a physical layer signaling such as downlink control signaling (DCI). The preset time domain unit may be each time domain unit (such as a subframe) within the uplink time interval. The time-frequency adjustment information is adjustment information related to time domain and/or frequency domain synchronization. The time-frequency adjustment information may be an absolute adjustment value, such as a preset adjustment value as defined, which may include a preset time domain adjustment value and a preset frequency domain adjustment value. In addition, the time-frequency adjustment information may also be an adjustment value relative to a reference value, such as the reference value may be an offset value relative to a current time domain or frequency domain adjustment value of the terminal, that is, equivalent to an offset adjustment value for the current time-frequency, which may include a time domain offset adjustment value and a frequency domain offset adjustment value.

In a specific application scenario, before performing the step of this embodiment, as a possible implementation, the steps of the embodiment may also include: determining the uplink time interval configured by the base station. For an embodiment of the present disclosure, the detection of the time domain adjustment signaling may be implemented on the preset time domain unit within the uplink time interval, such as each time domain unit, and further the time-frequency adjustment information included in the signaling carrying the time-frequency adjustment information may be obtained. Since the configuration information includes the frequency domain resource position to be detected, the detection of the time-frequency adjustment signaling may be implemented at a specific frequency domain resource position on the preset time domain unit of the uplink time interval, and then the frequency domain adjustment information included in the time-frequency adjustment signaling may be obtained.

At step 303, the time domain and/or frequency domain synchronization is adjusted according to the time-frequency adjustment information.

For this embodiment of the present disclosure, reference may be made to the relevant description of step 103 of the embodiments for details, which will not be repeated herein.

In summary, according to the method for adjusting time-frequency synchronization provided by the embodiments of the present disclosure, the adjustment information related to time domain and/or frequency domain synchronization sent by the base station may be detected on the preset time domain unit within the uplink time interval according to the configuration information including the first format and the frequency domain resource position to be detected sent by the base station, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved. Moreover, the method may also reduce the frequency of the terminal performing the GNSS information measurement, reduce the energy consumption of the terminal, and meet the user's personalized needs on the adjustment for the time domain synchronization and/or frequency domain synchronization.

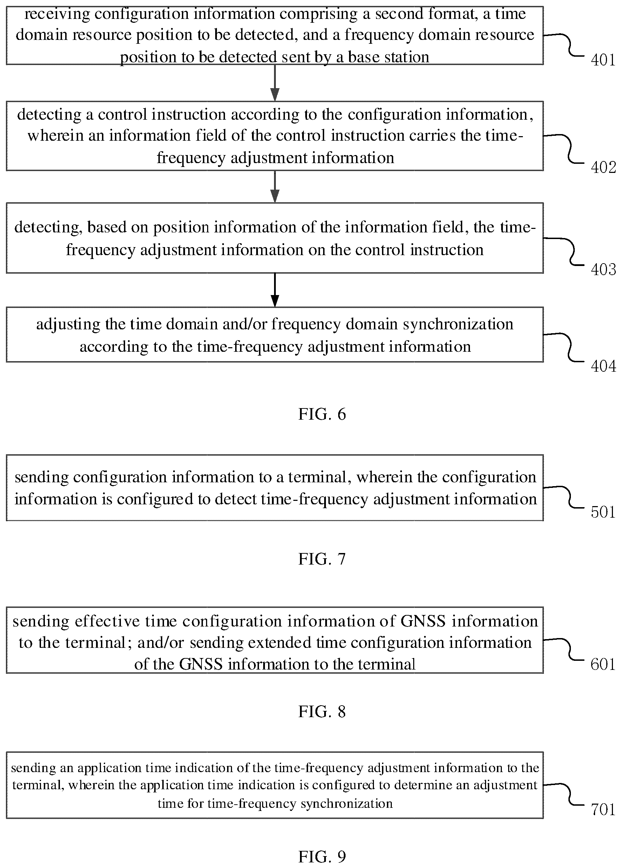

FIG. 6 is a flowchart of a method for adjusting time-frequency synchronization according to an embodiment of the present disclosure. The method is performed by a terminal, and as shown in FIG. 6, may include the following steps, based on the embodiment shown in FIG. 1.

At step 401, configuration information including a second format, a time domain resource position to be detected, and a frequency domain resource position to be detected, sent by a base station, is received.

The second format is an instruction format of a control instruction. In addition, the configuration information may also include the number of detections, an aggregation level, etc., which is not specifically limited herein.

At step 402, the control instruction is detected according to the configuration information, and an information field of the control instruction carries the time-frequency adjustment information.

The control instruction is an instruction for scheduling data transmission. Position and length information of the information field is predefined or determined based on the configuration information receiving from the base station.

At step 403, the time-frequency adjustment information is detected on the control instruction, based on position information of the information field.

In a specific application scenario, before performing the step of this embodiment, as a possible implementation, the steps of the embodiment may also include: determining the position information of the information field as predefined, or receiving a position configuration of the information field sent by the base station, in which, the position configuration is configured to configure the position information of the information field, and the position information of the information field includes at least one of a position or a length of the information field.

At step 404, time domain and/or frequency domain synchronization is adjusted according to the time-frequency adjustment information.

For this embodiment of the present disclosure, reference may be made to the relevant description of the step 103 of the embodiments for details, which will not be repeated herein.

In summary, according to the method for adjusting time-frequency synchronization provided by the embodiments of the present disclosure, the adjustment information related to time domain and/or frequency domain synchronization sent by the base station may be detected on the information field of the control instruction according to the configuration information including the second format, the time domain resource position to be detected, and the frequency domain resource position to be detected which is sent by the base station, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved. Moreover, the method may also reduce the frequency of the terminal performing the GNSS information measurement, reduce the energy consumption of the terminal, and meet the user's personalized needs on the adjustment for the time domain synchronization and/or frequency domain synchronization.

FIG. 7 is a flowchart of a method for adjusting time-frequency synchronization according to an embodiment of the present disclosure. The method is performed by a base station, and may include the following steps.

At step 501, configuration information is sent to a terminal. The configuration information is configured to detect time-frequency adjustment information.

The configuration information may include information related to time-frequency adjustment information detected by the terminal. The configuration information is borne and sent to the terminal by the base station via a high-layer signaling or a physical layer signaling, where the high-layer signaling may include system information, a radio resource control (RRC) signaling, or a media access control (MAC) control element (CE). For the embodiments of the present disclosure, by means of sending the configuration information to the terminal, the terminal may detect the time-frequency adjustment information sent by the base station according to the configuration information, and further implement the adjustment for the time domain and/or frequency domain synchronization based on the time-frequency adjustment information.

For an embodiment of the present disclosure, as a possible implementation, the steps of the embodiments may include: sending, to the terminal, the configuration information including a first format, a time domain resource position to be detected, and a frequency domain resource position to be detected, in which, the configuration information is configured to detect a time-frequency adjustment signaling within an uplink time interval, and the first format is a signaling format of the time-frequency adjustment signaling. Correspondingly, the steps of the embodiments may also include: sending the uplink time interval to the terminal. By means of sending the configuration information including the first format, the time domain resource position to be detected, and the frequency domain resource position to be detected to the terminal, the terminal may detect the time-frequency adjustment information sent by the base station within the uplink time interval according to the configuration information, and further implement the adjustment for the time domain and/or frequency domain synchronous based on the time-frequency adjustment information.

For the embodiments of the present disclosure, as a possible implementation method, the steps of the embodiments may include: sending, to the terminal, the configuration information including a first format and a frequency domain resource position to be detected, in which, the configuration information is configured to detect a time-frequency adjustment signaling on a preset time domain unit within an uplink time interval, and the first format is a signaling format of the time-frequency adjustment signaling. Correspondingly, the steps of the embodiments may also include: sending the uplink time interval to the terminal. By means of sending the configuration information including the first format and the frequency domain resource position to be detected to the terminal, the terminal may detect the time-frequency adjustment information sent by the base station on the preset time domain unit within the uplink time interval according to the configuration information, and further implement the adjustment for the time domain and/or frequency domain synchronous based on the time-frequency adjustment information.

For the embodiments of the present disclosure, as a possible implementation method, the steps of the embodiments may include: sending, to the terminal, the configuration information including a second format, a time domain resource position to be detected, and a frequency domain resource position to be detected, in which, the configuration information is configured to detect a control instruction, and an information field of the control instruction carries the time-frequency adjustment information, and the second format is an instruction format of the control instruction. Correspondingly, the steps of the embodiments may also include: sending a position configuration of the information field to the terminal, in which the position configuration is configured to configure position information of the information field; the position information of the information field includes at least one of a position and a length of the information field. By means of sending the configuration information including the second format, the time domain resource position to be detected, and the frequency domain resource position to be detected to the terminal, the terminal may detect the time-frequency adjustment information sent by the base station on the information field of the control instruction according to the configuration information, and further implement the adjustment for the time domain and/or frequency domain synchronization based on the time-frequency adjustment information.

In summary, according to the method for adjusting time-frequency synchronization provided by the embodiments of the present disclosure, the base station may send the configuration information to the terminal, so that the terminal detects the time-frequency adjustment information sent by the base station according to the configuration information, and further implements the adjustment for the time domain and/or frequency domain synchronization based on the time-frequency adjustment information. Therefore, it may effectively ensure that an error of the time domain or frequency domain synchronization of the terminal is maintained within a reasonable range, and an accuracy of the time domain or frequency domain synchronization may be improved.

FIG. 8 is a flowchart of a method for adjusting time-frequency synchronization according to an embodiment of the present disclosure. The method is performed by a base station, and as shown in FIG. 8, may include the following steps based on the embodiment shown in FIG. 7.

At step 601, effective time configuration information of global navigation satellite system (GNSS) information is sent to the terminal, and/or extended time configuration information of the GNSS information is sent to the terminal.

The effective time configuration information is configured to determine an effective time of current GNSS information, or the extended time configuration information is configured to update the effective time of the current GNSS information.

For the implementation of the present disclosure, after the base station sends the effective time configuration information of the GNSS information to the terminal, and/or after the base station sends the extended time configuration information of the GNSS information to the terminal, the terminal may perform the adjustment for the time domain synchronization and/or frequency domain synchronization within the effective time of the current GNSS information according to the time-frequency adjustment information.

In a specific application scenario, the effective time configuration information of the GNSS information may carry length information of the available time of the current GNSS information. Furthermore, after receiving the effective time configuration information of the GNSS information sent by the base station, the terminal may determine the available time of its own GNSS information based on the length information, that is, update a new GNSS information expiration time according to the available time of its own GNSS information, so as to ensure that the terminal does not perform a measurement operation of the GNSS information while maintaining a communication connection with the base station (not entering the IDLE state) before the new GNSS information expiration time. The extended time configuration information of the GNSS information may include whether to extend the effective time of the current GNSS information and information related to an extended duration. The information related to the extended duration may include at least one of a time length or an extended start time point that the current GNSS information is extended to be effective. Furthermore, after receiving the extended time configuration information of the GNSS information sent by the base station, the terminal may extend the effective time of the current GNSS information from an expiration time point of the current GNSS information and/or the extended start time point, and an extended length of the effective time is the time length, so as to ensure that the terminal does not perform the measurement operation of the GNSS information while maintaining the communication connection with the base station (not entering the IDLE state) before the new GNSS information expiration time. By means of this implementation, a frequency of the terminal performing GNSS information measurement can be reduced, and energy consumption of the terminal can be reduced.

In summary, according to the method for adjusting time-frequency synchronization provided by the embodiments of the present disclosure, the effective time configuration information of the GNSS information may be sent to the terminal, and/or the extended time configuration information of the GNSS information may be sent to the terminal, so that the terminal may perform the adjustment for the time domain synchronization and/or the frequency domain synchronization within the effective time of the current GNSS information according to the time-frequency adjustment information. By means of this implementation, the frequency of the terminal performing GNSS information measurement can be reduced, and the energy consumption of the terminal can be reduced.

FIG. 9 is a flowchart of a method for adjusting time-frequency synchronization according to an embodiment of the present disclosure. The method is performed by a base station, and as shown in FIG. 9, may include the following steps, based on the embodiment shown in FIG. 7.

At step 701, an application time indication of the time-frequency adjustment information is sent to the terminal. The application time indication is configured to determine an adjustment time for time-frequency synchronization.

For the implementation of the present disclosure, after the base station sends the application time indication of the time-frequency adjustment information to the terminal, the terminal may perform the adjustment for the time domain synchronization and/or the frequency domain synchronization at an indicated time. For example, the base station may send the application time indication of the time-frequency adjustment information to the terminal, and the application time indication indicates that the adjustment time for the time-frequency synchronization is at a slot that is 10 slots after a current time domain unit. Further, after receiving the application time indication of the time-frequency adjustment information, the terminal may start to perform the adjustment for the time domain synchronization and/or the frequency domain synchronization at the slot that is 10 slots after the current time domain unit.

In summary, according to the method for adjusting time-frequency synchronization provided by the embodiments of the present disclosure, the base station may send the application time indication of the time-frequency adjustment information to the terminal, so that the terminal may determine the adjustment time for the time-frequency synchronization according to the application time indication of the time-frequency adjustment information, and perform the adjustment for the time domain synchronization and/or the frequency domain synchronization at the adjustment time. By means of this implementation, settings of the application time regarding the adjustment for the time domain synchronization and/or the frequency domain synchronization by the terminal can be realized, which may meet the user's personalized needs on the adjustment for the time domain synchronization and/or the frequency domain synchronization.

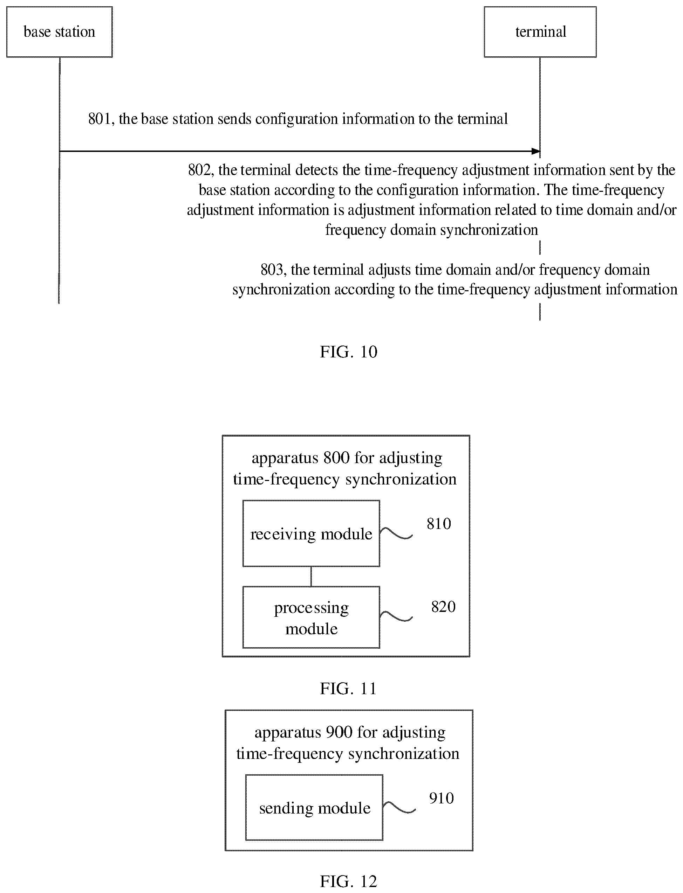

FIG. 10 is a timing sequence diagram of a method for adjusting time-frequency synchronization according to an embodiment of the present disclosure. The method is applied to a communication system for adjusting time-frequency synchronization. The system includes: a terminal and a base station. The base station sends configuration information to the terminal, the configuration information is configured to detect time-frequency adjustment information; the terminal detects the time-frequency adjustment information sent by the base station according to the configuration information, the time-frequency adjustment information is adjustment information related to time domain and/or frequency domain synchronization; the terminal adjusts time domain and/or frequency domain synchronization according to the time-frequency adjustment information.

Referring to FIG. 10, the method includes the following steps.

At step 801: the base station sends configuration information to the terminal.

The configuration information may include information related to time-frequency adjustment information sent by the base station. The configuration information is borne and sent by the base station via a high-layer signaling or a physical layer signaling. The high-layer signaling may include system information, a radio resource control (RRC) signaling, or a media access control (MAC) control element (CE).

In a specific application scenario, as a possible implementation method, the base station may send, to the terminal, the configuration information including a first format, a time domain resource position to be detected, and a frequency domain resource position to be detected. The configuration information is configured to detect a time-frequency adjustment signaling within an uplink time interval, and the first format is a signaling format of the time-frequency adjustment signaling.

As a possible implementation, the base station may send, to the terminal, the configuration information including a first format and a frequency domain resource position to be detected. The configuration information is configured to detect a time-frequency adjustment signaling on a preset time domain unit within an uplink time interval, and the first format is a signaling format of the time-frequency adjustment signaling.

As a possible implementation, the base station may send, to the terminal, the configuration information including a second format, a time domain resource position to be detected, and a frequency domain resource position to be detected. The configuration information is configured to detect a control instruction, and an information field of the control instruction carries the time-frequency adjustment information, and the second format is an instruction format of the control instruction.

At step 802, the terminal detects the time-frequency adjustment information sent by the base station according to the configuration information. The time-frequency adjustment information is adjustment information related to time domain and/or frequency domain synchronization.

The time-frequency adjustment information is adjustment information related to time domain and/or frequency domain synchronization. The time-frequency adjustment information may be an absolute adjustment value, such as a preset adjustment value as defined, which may include a preset time domain adjustment value and a preset frequency domain adjustment value. In addition, the time-frequency adjustment information may also be an adjustment value relative to a reference value, such as the reference value may be an offset value relative to a current time domain or frequency domain adjustment value of the terminal, that is, equivalent to an offset adjustment value for the current time-frequency, which may include a time domain offset adjustment value and a frequency domain offset adjustment value. For the embodiments of the present disclosure, the adjustment information related to time domain and/or frequency domain synchronization sent by the base station may be detected and obtained at a specific position according to the configuration information.

In a specific application scenario, as an optional embodiment, in a case where the configuration information is configuration information including a first format, a time domain resource position to be detected, and a frequency domain resource position to be detected, the terminal may detect the time-frequency adjustment signaling within the uplink time interval, and the time-frequency adjustment signaling includes the time-frequency adjustment information. That is, detection of the time-frequency adjustment signaling may be implemented at a specific time domain resource position and/or a specific frequency domain resource position within the uplink time interval, and then the time-frequency adjustment information included in the time-frequency adjustment signaling may be obtained. The time-frequency adjustment signaling may be a high-level signaling such as a radio resource control (RRC) signaling, a media access control (MAC) control element (CE) or a physical layer signaling such as a downlink control signaling (DCI).

In a specific application scenario, as an optional embodiment, in a case where the configuration information is configuration information including a first format and a frequency domain resource position to be detected, the terminal may detect the time-frequency adjustment signaling on a preset time domain unit within the uplink time interval, and the time-frequency adjustment signaling includes the time-frequency adjustment information. That is, the detection of the time domain adjustment signaling may be implemented on the preset time domain unit within the uplink time interval, such as each time domain unit, and then the time-frequency adjustment information included in a signaling carrying the time-frequency adjustment information is obtained. Since the configuration information may include the frequency domain resource position to be detected, the detection of the time-frequency adjustment signaling may be implemented at a specific frequency domain resource position on the preset time domain unit of the uplink time interval, and then the frequency domain adjustment information included in the time-frequency adjustment signaling is obtained. The time-frequency adjustment signaling may be a high-level signaling such as an RRC signaling, a MAC CE or a physical layer signaling such as DCI. The preset time domain unit may be each time domain unit (such as a subframe) within the uplink time interval.

In a specific application scenario, as an optional embodiment, in a case where the configuration information includes the second format, the time domain resource position to be detected, and the frequency domain resource position to be detected, the terminal may detect the time-frequency adjustment information sent by the base station in an information field of the control instruction. The control instruction is an instruction for scheduling data transmission. Position and length information of the information is are predefined or determined based on the configuration information receiving from the base station.

At step 803, the terminal adjusts time domain and/or frequency domain synchronization according to the time-frequency adjustment information.

For the embodiments of the present disclosure, as an optional implementation, the steps of the embodiments may include: adjusting the time domain and/or frequency domain synchronization according to the preset adjustment value or the offset adjustment value. Specifically, a current time domain synchronization value may be adjusted to the preset time domain adjustment value and/or a current frequency domain synchronization value may be adjusted to the preset frequency domain adjustment value. Or, an offset value for the current time domain synchronization may be adjusted according to the time domain offset adjustment value and/or an offset value for the current frequency domain synchronization may be adjusted according to the frequency domain offset adjustment value. By means of adjusting the time domain and/or frequency domain synchronization value based on the time-frequency adjustment information, it may effectively ensure that an error of the time domain or frequency domain synchronization of the terminal is maintained within a reasonable range, and effectively maintain synchronization of uplink time-frequency.

In a specific application scenario, for transmissions with an uplink and downlink relationship, the terminal needs to maintain uplink synchronization based on global navigation satellite system (GNSS) measurements and some auxiliary information. However, in the 3rd Generation Partnership Project (3GPP) R18 standard, when supporting services with longer transmission times, in a case where GNSS information expires, the terminal needs to disconnect a communication connection with the network side, enters an idle (IDLE) state, and re-executes a measurement process of the GNSS information. However, this method will not be able to keep the GNSS information in an effective state, and thus cannot support continuous communication between the terminal and the network side, which is likely to lead to a certain amount of energy consumption.

In view of this, for the embodiments of the present disclosure, as an optional implementation, the configuration information may also include the GNSS information of the terminal itself, and accordingly, the terminal may perform adjustment for the time domain synchronization and/or frequency domain synchronization within the effective time of the current GNSS information according to the time-frequency adjustment information. In addition, in order to ensure the continuous communication between the terminal and the network side and realize closed-loop synchronization adjustment for the time domain and/or the frequency domain, the terminal may timely obtain an available duration of the current GNSS information, and when the current GNSS information expires, the effective time of the GNSS information is determined by extending or re-measuring the available duration of GNSS, so that the GNSS information keeps in the effective state. In a specific application scenario, as an optional implementation, the steps of the embodiments may include: receiving effective time configuration information of the GNSS information; and/or receiving extended time configuration information of the GNSS information; determining the effective time of the current GNSS information according to the effective time configuration information; and/or updating the effective time of the current GNSS information according to the extended time configuration information.

In a specific application scenario, the effective time configuration information of the GNSS information may carry length information of the available time of the current GNSS information. Furthermore, after receiving the effective time configuration information of the GNSS information sent by the base station, the terminal may determine the available time of its own GNSS information based on the length information, that is, update a new GNSS information expiration time according to the available time of its own GNSS information, so as to ensure that the terminal does not perform a measurement operation of the GNSS information while maintaining a communication connection with the base station (not entering the IDLE state) before the new GNSS information expiration time. The extended time configuration information of the GNSS information may include whether to extend the effective time of the current GNSS information and information related to an extended duration. The information related to the extended duration may include at least one of a time length or an extended start time point that the current GNSS information is extended to be effective. Furthermore, after receiving the extended time configuration information of the GNSS information sent by the base station, the terminal may extend the effective time of the current GNSS information from an expiration time point of the current GNSS information and/or the extended start time point, and an extended length of the effective time is the time length, so as to ensure that the terminal does not perform the measurement operation of the GNSS information while maintaining the communication connection with the base station (not entering the IDLE state) before the new GNSS information expiration time. By means of this implementation, a frequency of the terminal performing GNSS information measurement can be reduced, and energy consumption of the terminal can be reduced.

For the embodiments of the present disclosure, as an optional implementation, in a case of adjusting the time domain and/or frequency domain synchronization according to the time-frequency adjustment information, the terminal may perform the adjustment for the time domain synchronization and/or the frequency domain synchronization at an indicated time. Accordingly, the steps of the embodiments may include: determining an adjustment time for time-frequency synchronization according to an application time indication of the time-frequency adjustment information; and performing the adjustment for time domain synchronization and/or frequency domain synchronization at the adjustment time. Accordingly, the steps of the embodiments may also include: receiving the application time indication of the time-frequency adjustment information sent by the base station. For example, according to the application time indication of the time-frequency adjustment information, the adjustment time for the time-frequency synchronization is determined to be at a slot that is 10 slots after a current time domain unit, then the terminal may start to perform the adjustment for the time domain synchronization and/or frequency domain synchronization at the slot that is 10 slots after the current time domain unit. By means of this implementation, settings of the application time regarding the adjustment for the time domain synchronization and/or frequency domain synchronization can be realized, which can meet user's personalized needs on the adjustment for the time domain synchronization and/or frequency domain synchronization.

It should be noted that the embodiments of the present disclosure may select a combination of any one or more of the steps of the optional implementations to adjust the time domain and/or frequency domain synchronization. For example, the time domain and/or frequency domain synchronization may be adjusted at an original effective time of the current GNSS information according to the preset adjustment value or the offset adjustment value, or the time domain and/or frequency domain synchronization may be adjusted according to the preset adjustment value or the offset adjustment value within the extended effective time of the current GNSS information, or the time domain and/or frequency domain synchronization may be adjusted according to the preset adjustment value or the offset adjustment value at the adjustment time within the extended effective time of the current GNSS information, and so on, which is not specifically limited herein.

By means of applying the method for adjusting time-frequency synchronization provided in this embodiment, the adjustment information related to time domain and/or frequency domain synchronization sent by the base station may be detected according to the configuration information sent by the base station, and the time domain and/or frequency domain synchronization may be adjusted according to the adjustment information related to time domain and/or frequency domain synchronization. Therefore, it may effectively ensure that an error of the time domain or frequency domain synchronization of the terminal is maintained within a reasonable range, and an accuracy of the time domain or frequency domain synchronization may be improved. Moreover, the method may also reduce the frequency of the terminal performing the GNSS information measurement, reduce the energy consumption of the terminal, and meet the user's personalized needs on the adjustment for time domain synchronization and/or frequency domain synchronization.

In the embodiments provided by the present disclosure, the method provided by the embodiments of the present disclosure is introduced from the perspectives of the terminal and the base station. In order to implement the functions in the method provided by the embodiments of the present disclosure, the terminal and the base station may include a hardware structure and a software module, and implement the functions in the form of the hardware structure, the software module, or the hardware structure plus the software module. A function of the functions may be performed in the form of the hardware structure, the software module, or the hardware structure plus the software module.

Corresponding to the method for adjusting time-frequency synchronization provided in the above embodiments, the present disclosure also provides an apparatus for adjusting time-frequency synchronization. Since the apparatus for adjusting time-frequency synchronization provided in the embodiments of the present disclosure corresponds to the method for adjusting time-frequency synchronization provided in the above embodiments, the implementation of the method for adjusting time-frequency synchronization is also applicable to the apparatus for adjusting time-frequency synchronization provided in this embodiment, and will not be described in detail in this embodiment.

FIG. 11 is a block diagram of an apparatus 800 for adjusting time-frequency synchronization according to an embodiment of the present disclosure. The apparatus 800 for adjusting time-frequency synchronization may be a terminal.

As shown in FIG. 11 , the apparatus 800 may include:
a receiving module 810, configured to receive configuration information sent by a base station;
a processing module 820, configured to detect time-frequency adjustment information sent by the base station according to the configuration information, in which, the time-frequency adjustment information is adjustment information related to time domain and/or frequency domain synchronization;
the processing module 820 is further configured to adjust the time domain and/or frequency domain synchronization according to the time-frequency adjustment information.

In some embodiments of the present disclosure, the processing module 820 may be configured to detect, according to the configuration information, a time-frequency adjustment signaling within an uplink time interval, in which, the time-frequency adjustment signaling includes the time-frequency adjustment information, the configuration information includes a first format, a time domain resource position to be detected, and a frequency domain resource position to be detected, the first format is a signaling format of the time-frequency adjustment signaling.

In some embodiments of the present disclosure, the receiving module 810 may be configured to detect, according to the configuration information, a time-frequency adjustment signaling on a preset time domain unit within an uplink time interval, in which, the time-frequency adjustment signaling includes the time-frequency adjustment information, the configuration information includes a first format and a frequency domain resource position to be detected, the first format is a signaling format of the time-frequency adjustment signaling.

In some embodiments of the present disclosure, the processing module 820 may also be configured to determine the uplink time interval configured by the base station.

In some embodiments of the present disclosure, the processing module 820 also be configured to detect a control instruction according to the configuration information, in which, an information field of the control instruction carries the time-frequency adjustment information, and the configuration information includes a second format, a time domain resource position to be detected, and a frequency domain resource position to be detected, and the second format is an instruction format of the control instruction; detecting, based on position information of the information field, the time-frequency adjustment information on the control instruction.

In some embodiments of the present disclosure, the processing module 820 may also be configured to determine the position information of the information field that is predefined; or the receiving module 810 may also be configured to receive a position configuration of the information field sent by the base station, in which, the position configuration is configured to configure the position information of the information field; in which, the position information of the information field includes at least one of a position or a length of the information field.

In some embodiments of the present disclosure, the time-frequency adjustment information includes a preset adjustment value, or an offset adjustment value of current time-frequency, and the processing module 820 may be configured to adjust the time domain and/or frequency domain synchronization according to the preset adjustment value or the offset adjustment value.

In some embodiments of the present disclosure, the receiving module 810 may also be configured to receive effective time configuration information of global navigation satellite system (GNSS) information; and/or receive extended time configuration information of the GNSS information.

In some embodiments of the present disclosure, the processing module 820 may also be configured to determine an effective time of current GNSS information according to the effective time configuration information; and/or update the effective time of the current GNSS information according to the extended time configuration information.

In some embodiments of the present disclosure, the processing module 820 may be configured to perform adjustment for time domain synchronization and/or frequency domain synchronization within the effective time of the current GNSS information according to the time-frequency adjustment information.

In some embodiments of the present disclosure, the processing module 820 may also be configured to determine an adjustment time for time-frequency synchronization according to an application time indication of the time-frequency adjustment information; and perform adjustment for time domain synchronization and/or frequency domain synchronization at the adjustment time.

In some embodiments of the present disclosure, the receiving module 810 may also be configured to receive the application time indication of the time-frequency adjustment information sent by the base station.

FIG. 12 is a block diagram of an apparatus 900 for adjusting time-frequency synchronization according to an embodiment of the present disclosure. The apparatus 900 for adjusting time-frequency synchronization may be a base station.

As shown in FIG. 12 , the apparatus 900 may include:
a sending module 910 may be configured to send configuration information to a terminal, in which, the configuration information is configured to detect time-frequency adjustment information.

In some embodiments of the present disclosure, the sending module 910 may be configured to send, to the terminal, the configuration information including a first format, a time domain resource position to be detected, and a frequency domain resource position to be detected, in which, the configuration information is configured to detect a time-frequency adjustment signaling within an uplink time interval, and the first format is a signaling format of the time-frequency adjustment signaling.

In some embodiments of the present disclosure, the sending module 910 may be configured to send, to the terminal, the configuration information including a first format and a frequency domain resource position to be detected, in which, the configuration information is configured to detect a time-frequency adjustment signaling on a preset time domain unit within an uplink time interval, and the first format is a signaling format of the time-frequency adjustment signaling.

In some embodiments of the present disclosure, the sending module 910 may be configured to send, to the terminal, the configuration information including a second format, a time domain resource position to be detected, and a frequency domain resource position to be detected, in which, the configuration information is configured to detect a control instruction, and an information field of the control instruction carries the time-frequency adjustment information, and the second format is an instruction format of the control instruction.

In some embodiments of the present disclosure, the sending module 910 may be configured to send the uplink time interval to the terminal.

In some embodiments of the present disclosure, the sending module 910 may be configured to send a position configuration of the information field to the terminal, in which, the position configuration is configured to configure position information of the information field; in which, the position information of the information field includes at least one of a position and a length of the information field.

In some embodiments of the present disclosure, the sending module 910 may be configured to effective time configuration information of global navigation satellite system (GNSS) information to the terminal, in which, the effective time configuration information is configured to determine an effective time of current GNSS information; and/or send extended time configuration information of the GNSS information to the terminal, in which, the extended time configuration information is configured to update the effective time of the current GNSS information.

In some embodiments of the present disclosure, the sending module 910 may be configured to send an application time indication of the time-frequency adjustment information to the terminal, in which, the application time indication is configured to determine an adjustment time for time-frequency synchronization.

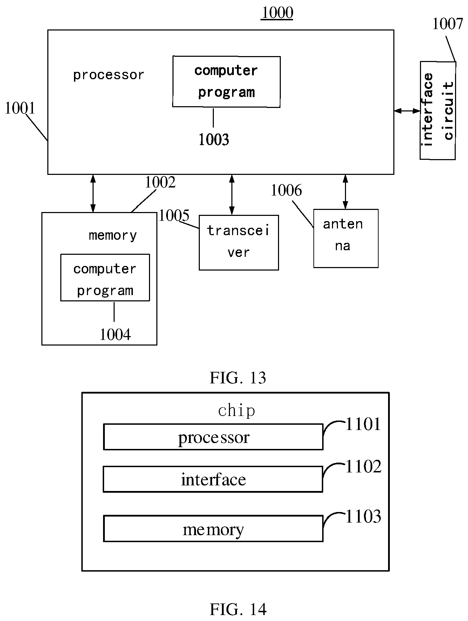

FIG. 13 is a structural diagram of a communication device 1000 provided by an embodiment of the disclosure. The communication device 1000 may be a network side device or a user equipment, or may be a chip, a chip system or a processor that supports the network side device to realize the above-described methods, or may be a chip, a chip system or a processor that supports the user equipment to realize the above-described methods. The communication device 1000 may be configured to realize the methods described in the above method embodiments with reference to the description of the above-described method embodiments.

The communication device 1000 may include one or more processors 1001. The processor 1001 may be a general purpose processor or a dedicated processor, such as, a baseband processor and a central processor. The baseband processor is used for processing communication protocols and communication data. The central processor is used for controlling the communication device (e.g., a network side device, a baseband chip, a terminal, a terminal chip, a DU, or a CU), executing computer programs, and processing data of the computer programs.

Optionally, the communication device 1000 may include one or more memories 1002 on which computer programs 1004 may be stored. The processor 1001 executes the computer programs 1004 to cause the communication device 1000 to perform the methods described in the above method embodiments. Optionally, the memory 1002 may also store data. The communication device 1000 and the memory 1002 may be provided separately or may be integrated together.

Optionally, the communication device 1000 may also include a transceiver 1005 and an antenna 1006. The transceiver 1005 may be referred to as a transceiver unit, a transceiver machine, or a transceiver circuit, for realizing a transceiver function. The transceiver 1005 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 1000 may also include one or more interface circuits 1007. The interface circuits 1007 are used to receive code instructions and transmit them to the processor 1001. The processor 1001 runs the code instructions to cause the communication device 1000 to perform the method described in the method embodiments.

In an implementation, the processor 1001 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1001 may store a computer program 1003. The processor 1001 runs the computer program 1003 to cause the communication device 1000 to perform the methods described in the method embodiments above. The computer program 1003 may be solidified in the processor 1001, and in such case the processor 1001 may be implemented by hardware.

In an implementation, the communication device 1000 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver are produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a user equipment, but the scope of the communication device described in the disclosure is not limited thereto, and the structure of the communication device may not be limited by FIG. 13. The communication device may be a stand-alone device or may be part of a larger device. For example, the communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication device is a chip or a chip system reference can be made to FIG. 14. FIG. 14 is a structural diagram of a chip provided in an embodiment of the disclosure. The chip 1100 includes a processor 1101 and an interface 1102. There may be may be one or more processors 1101, and a plurality of interfaces 1102.

Optionally, the chip 1100 may also include a memory 1103 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", or other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to any computer program product, apparatus, and/or means for providing machine instructions and/or data to a programmable processor (for example, a magnetic disk, an optical disk, a memory, a programmable logic device (PLD)), including machine-readable media that receives machine instructions as machine-readable signals. The term "machine-readable signal" refers to any signal used to provide machine instructions and/or data to a programmable processor.

A system and technologies described herein may be implemented in a computing system that includes back-end components (e.g., as a data server), or in a computing system that includes middleware components (e.g., an application server), or in a computing system that includes front-end components (e.g., a user computer having a graphical user interface or web browser through which the user may interact with implementations of the system and technologies described herein), or in a computing system that includes any combination of such back-end components, middleware components, front-end components. The components of the system may be interconnected by any form or medium of digital data communication (e. g., a communications network). Examples of the communication networks include: local area network (LAN), wide area network (WAN), and the Internet.

A computer system may include a client and a server. The client and the server are generally remote from each other and typically interact over the communications network. A relationship of client and server is created by a computer program running on corresponding computers and having a client-server relationship with each other.

It should be understood that various forms of the process shown above may be used, with steps reordered, added or deleted. For example, each step described in the present disclosure can be executed in parallel, sequentially, or in a different order. As long as the desired results of the technical solution disclosed in the present disclosure can be achieved, there is no limitation here.

In addition, it should be understood that various embodiments described in present disclosure can be implemented alone or in combination with other embodiments if the solution allows.

Those skilled in the related art may realize that, in combination with the examples described in embodiments of the present disclosure, units and algorithm steps may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for adjusting time-frequency synchronization, performed by a terminal, comprising:
receiving configuration information sent by a base station;
detecting time-frequency adjustment information sent by the base station according to the configuration information, wherein the time-frequency adjustment information is adjustment information related to time domain and/or frequency domain synchronization;
adjusting the time domain and/or frequency domain synchronization according to the time-frequency adjustment information.

2. The method according to claim 1, wherein detecting the time-frequency adjustment information sent by the base station according to the configuration information comprises:
detecting, according to the configuration information, a time-frequency adjustment signaling within an uplink time interval, wherein the time-frequency adjustment signaling comprises the time-frequency adjustment information, the configuration information comprises a first format, a time domain resource position to be detected, and a frequency domain resource position to be detected, the first format is a signaling format of the time-frequency adjustment signaling.

3. The method according to claim 1, wherein detecting the time-frequency adjustment information sent by the base station according to the configuration information comprises:
detecting, according to the configuration information, a time-frequency adjustment signaling on a preset time domain unit within an uplink time interval, wherein the time-frequency adjustment signaling comprises the time-frequency adjustment information, the configuration information comprises a first format and a frequency domain resource position to be detected, the first format is a signaling format of the time-frequency adjustment signaling.

4. The method according to claim 2 or 3, further comprising:
determining the uplink time interval configured by the base station.

5. The method according to claim 1, wherein detecting the time-frequency adjustment information sent by the base station according to the configuration information comprises:
detecting a control instruction according to the configuration information, wherein an information field of the control instruction carries the time-frequency adjustment information, and the configuration information comprises a second format, a time domain resource position to be detected, and a frequency domain resource position to be detected, and the second format is an instruction format of the control instruction;
detecting, based on position information of the information field, the time-frequency adjustment information on the control instruction.

6. The method according to claim 5, further comprising:
determining the position information of the information field that is predefined; or
receiving a position configuration of the information field sent by the base station, wherein the position configuration is configured to configure the position information of the information field;
wherein the position information of the information field comprises at least one of a position or a length of the information field.

7. The method according to claim 1, wherein the time-frequency adjustment information comprises a preset adjustment value, or an offset adjustment value of current time-frequency, and adjusting the time domain and/or frequency domain synchronization according to the time-frequency adjustment information comprises:
adjusting the time domain and/or frequency domain synchronization according to the preset adjustment value or the offset adjustment value.

8. The method according to any one of claims 1 to 7, further comprising:
receiving effective time configuration information of global navigation satellite system (GNSS) information; and/or
receiving extended time configuration information of the GNSS information.

9. The method according to claim 8, further comprising:
determining an effective time of current GNSS information according to the effective time configuration information; and/or
updating the effective time of the current GNSS information according to the extended time configuration information.

10. The method according to claim 9, wherein adjusting the time domain and/or frequency domain synchronization according to the time-frequency adjustment information comprises:
performing adjustment for time domain synchronization and/or frequency domain synchronization within the effective time of the current GNSS information according to the time-frequency adjustment information.

11. The method according to any one of claims 1 to 10, further comprising:
determining an adjustment time for time-frequency synchronization according to an application time indication of the time-frequency adjustment information; and
performing adjustment for time domain synchronization and/or frequency domain synchronization at the adjustment time.

12. The method according to claim 11, further comprising:
receiving the application time indication of the time-frequency adjustment information sent by the base station.

13. A method for adjusting time-frequency synchronization, performed by a base station, comprising:
sending configuration information to a terminal, wherein the configuration information is configured to detect time-frequency adjustment information.

14. The method according to claim 13, wherein sending the configuration information to the terminal comprises:
sending, to the terminal, the configuration information comprising a first format, a time domain resource position to be detected, and a frequency domain resource position to be detected, wherein the configuration information is configured to detect a time-frequency adjustment signaling within an uplink time interval, and the first format is a signaling format of the time-frequency adjustment signaling.

15. The method according to claim 13, wherein sending the configuration information to the terminal comprises:
sending, to the terminal, the configuration information comprising a first format and a frequency domain resource position to be detected, wherein the configuration information is configured to detect a time-frequency adjustment signaling on a preset time domain unit within an uplink time interval, and the first format is a signaling format of the time-frequency adjustment signaling.

16. The method according to claim 13, wherein sending the configuration information to the terminal comprises:
sending, to the terminal, the configuration information comprising a second format, a time domain resource position to be detected, and a frequency domain resource position to be detected, wherein the configuration information is configured to detect a control instruction, and an information field of the control instruction carries the time-frequency adjustment information, and the second format is an instruction format of the control instruction.

17. The method according to claim 14 or 15, further comprising:
sending the uplink time interval to the terminal.

18. The method according to claim 16, further comprising:
sending a position configuration of the information field to the terminal, wherein the position configuration is configured to configure position information of the information field;
wherein the position information of the information field comprises at least one of a position and a length of the information field.

19. The method according to claim 13, further comprising:
sending effective time configuration information of global navigation satellite system (GNSS) information to the terminal, wherein the effective time configuration information is configured to determine an effective time of current GNSS information; and/or
sending extended time configuration information of the GNSS information to the terminal, wherein the extended time configuration information is configured to update the effective time of the current GNSS information.

20. The method according to claim 13, further comprising:
sending an application time indication of the time-frequency adjustment information to the terminal, wherein the application time indication is configured to determine an adjustment time for time-frequency synchronization.

21. A terminal, comprising:
a receiving module, configured to receive configuration information sent by a base station;
a processing module, configured to detect time-frequency adjustment information sent by the base station according to the configuration information, wherein the time-frequency adjustment information is adjustment information related to time domain and/or frequency domain synchronization;
the processing module further configured to adjust the time domain and/or frequency domain synchronization according to the time-frequency adjustment information.

22. A base station, comprising:
a sending module configured to send configuration information to a terminal, wherein the configuration information is configured to detect time-frequency adjustment information.

23. A communication device, comprising: a transceiver; a memory; a processor, coupled to the transceiver and the memory respectively, wherein the processor is configured to, by means of executing computer executable instructions on the memory, control wireless signal reception and transmission of the transceiver, and capable of implementing the method according to any one of claims 1 to 20.

24. A computer storage medium, storing computer executable instructions which, when executed by a processor, can implement the method according to any one of claims 1 to 20.

25. A communication system comprising a terminal and a base station, wherein
the terminal is configured to execute the method according to any one of claims 1 to 12,
the base station is configured to execute the method according to any one of claims 13 to 20.
